# FASCICULE DE BREVET EUROPEEN

(11) **EP 2 828 216 B1**
(45) Date de publication et mention de la délivrance du brevet: **17.02.2016**
(21) Numéro de dépôt: 13711404.7
(22) Date de dépôt: 22.03.2013
(51) Int. Cl.: C04B 111/28, C01F 5/24, C01F 11/18, C04B 28/10, C04B 14/26, C04B 2/10, C04B 18/02, C09K 21/02

(54) **COMPOSITION MINERALE A BASE D'UNE PHASE SOLIDE MIXTE DE CARBONATES DE CALCIUM ET DE MAGNESIUM, SON PROCEDE DE PREPARATION ET SON UTILISATION**
MINERALZUSAMMENSETZUNG AUS EINER GEMISCHTEN FESTEN PHASE VON CALCIUM- UND MAGNESIUMCARBONAT, VERFAHREN ZUR HERSTELLUNG DAVON UND VERWENDUNG DAVON
MINERAL COMPOSITION MADE FROM A MIXED SOLID PHASE OF CALCIUM AND MAGNESIUM CARBONATES, METHOD OF PREPARING SAME AND USE THEREOF

(30) Priorité: 22.03.2012 BE 201200199; 27.04.2012 US 201261639213 P; 22.08.2012 US 201261691868 P
(43) Date de publication de la demande: 28.01.2015
(73) Titulaire: S.A. Lhoist Recherche et Développement, 1342 Ottignies-Louvain-la-Neuve (BE)
(72) Inventeur: LORGOUILLOUX, Marion, B-7110 Strépy Bracquegnies (BE); GÄRTNER, Robert Sebastian, B-1501 Buizingen (BE); PELLETIER, Marc, F-94160 Saint-Mandé (FR); CHOPIN, Thierry, B-1180 Uccle (BE)
(74) Mandataire: Gevers Patents
(86) Numéro de dépôt international: PCT/EP2013/056058
(87) Numéro de publication internationale: WO 2013/139957

(56) Documents cités:
- EP-A1- 0 526 121
- EP-A1- 2 322 581
- JP-A- 5 229 819
- JP-A- 63 123 810

## Description

La présente invention se rapporte à une composition minérale à base d'une phase solide mixte de carbonates de calcium et de magnésium, à son procédé de préparation et à son utilisation.

Les carbonates de calcium de synthèse sont connus, principalement pour des utilisations en tant que fillers (papier, peinture, plastiques...). Pour ces applications, il est connu notamment de synthétiser des carbonates denses, en particulier de la calcite qui est de morphologie scalenohédrale, rhombohédrale ou prismatique ou de l'aragonite de morphologie aciculaire.

On connaît aussi des compositions à base de carbonates de calcium et de magnésium de synthèse qui sont notamment utilisées dans le domaine de la fabrication des papiers et matières plastiques.

On peut citer par exemple des compositions selon les demandes de brevet EP-A-2322581 et DE-A-3245103. La première divulgue des particules de carbonates de magnésium plaquettaires sous la forme d'hydromagnésite en mélange avec du carbonate de calcium colloïdal, bien appropriées comme charges dans du papier ou des matières plastiques. La seconde divulgue des particules de carbonate de calcium scalénohédrales (soit en forme de grain de riz) en mélange avec des particules plaquettaires de carbonate basique de magnésium. Les carbonates respectifs sont produits distinctement et ne forment pas un composite.

Les compositions décrites dans le brevet européen EP-B-0526121 sont formées d'un mélange uniforme de particules de carbonate de calcium ayant une structure cristalline d'aragonite aciculaire à configuration de particule en colonne et de carbonate de magnésium hydraté à configuration de particule plaquettaire.

On connaît aussi une demande de brevet japonaise JP 63-123810 qui décrit un procédé de production d'une composition minérale à base d'une phase solide mixte de carbonates de calcium et de magnésium. Ce procédé comprend une carbonatation d'une suspension aqueuse de carbonate basique de magnésium, à laquelle on ajoute en continu une suspension aqueuse d'hydroxyde de magnésium et d'hydroxyde de calcium. La carbonatation est effectuée avec un grand débit de CO₂, ce qui donne lieu à la formation de particules sphériques et poreuses de carbonate basique de magnésium sur les noyaux de germination de carbonate basique de magnésium initialement présents en suspension, les pores de ces particules étant partiellement remplis de carbonate de calcium. Cette composition est très dense et destinée à la production de charges dans le domaine de la fabrication du papier, de peintures, de matières plastiques ou encore dans le domaine médical.

La présente invention a pour but de développer des compositions minérales, notamment destinées à la construction. Dans ce domaine, il existe par exemple un besoin de développer des compositions minérales pouvant présenter une alternative intéressante aux mousses de polyuréthane ou phénoliques, habituellement utilisées par exemple dans les panneaux d'isolation thermique. Les matériaux minéraux présentent en effet l'avantage par rapport aux mousses organiques d'avoir une durée de vie plus longue, une tenue au feu nettement meilleure, ainsi qu'un impact environnemental réduit. Il est dès lors souhaitable que ces nouvelles compositions minérales possèdent des propriétés thermiques semblables à celles des mousses connues. Il y a donc lieu de développer des matériaux minéraux qui présentent une porosité volumique élevée et contrôlée, avec une masse volumique peu élevée, tout en conservant des propriétés mécaniques acceptables (résistance à la flexion, à la compression, aux chocs...).

Dans un milieu poreux, on entend par conductivité thermique une valeur λ qui vaut la somme de i) la conductivité thermique du gaz occlus dans les pores, rapportée à la fraction volumique des pores dans la composition et de ii) la conductivité thermique de la matière solide, rapportée à la fraction volumique de cette matière solide dans la composition. La conductivité thermique des gaz est généralement de l'ordre de 10⁻² W/K/m et celle des solides de l'ordre de 1 à 10² W/K/m; plus la fraction volumique de gaz (donc de pores) dans la composition est grande, plus la conductivité thermique de la composition sera faible et plus le matériau sera isolant.

Pour résoudre ce problème, il est prévu suivant l'invention une composition minérale à base d'une phase solide mixte de carbonates de calcium et de magnésium de synthèse, formée d'une partie calcique cristallisée et d'une partie magnésienne cristallisée sous forme de plaquettes, les cristaux de la partie calcique et ceux de la partie magnésienne formant des agrégats composites, ces agrégats étant eux-mêmes au moins partiellement agglomérés sous la forme d'agglomérats, ladite partie calcique comprenant au moins un carbonate choisi parmi le groupe constitué de la calcite, de l'aragonite et de leurs mélanges, ladite partie magnésienne comprenant de l'hydromagnésite sous forme plaquettaire, ladite phase solide mixte de carbonates de ladite composition minérale présentant une masse volumique en vrac inférieure ou égale à 250 kg/m³, et supérieure ou égale à 80 kg/m³, mesurée selon la norme EN 459.2.

La calcite et l'aragonite sont deux structures cristallines de carbonate de calcium CaCO₃. L'hydromagnésite, appelée aussi carbonate basique de magnésium, est de formule Mg₅(CO₃)₄(OH)₂.4H₂O ou 4MgCO₃.Mg(OH)₂.4H₂O. Dans les bases de données de diffraction des rayons X (International Centre for Diffraction Data (ICDD) database), l'hydromagnésite correspond aux fiches portant les références 00-025-0513 (monoclinique) et 01-070-1177 (orthorhombique). Elle n'a pas à être confondue avec la magnésite, carbonate de magnésium de formule MgCO₃, ou avec la nesquéhonite, un carbonate de magnésium hydraté de formule MgCO₃.3H₂O, qui sont à éviter suivant l'invention.

Par le terme « agrégats », on entend, au sens de la présente invention un ensemble cohésif de cristaux.

Par les termes «agglomérats», on entend, au sens de la présente invention un ensemble lâche d'agrégats de cristaux et/ou de cristaux, qui peut être facilement détruit par des moyens mécaniques (ultrasons, agitation, cisaillement, vibration...).

Par l'expression "masse volumique en vrac", on entend, suivant l'invention, le rapport entre la masse du matériau et le volume apparent de l'ensemble des agglomérats ou grains, mesurée selon la norme EN 459.2.

La faible masse volumique en vrac de la phase solide mixte de la composition suivant l'invention résulte d'un large volume poreux, c'est-à-dire d'une incorporation élevée de gaz dans la phase solide mixte qui présente plusieurs niveaux de porosité : au sein des agrégats de cristaux, au sein des agglomérats d'agrégats et même entre les agglomérats ou grains.

Par l'expression « volume poreux », on entend dans la présente invention un volume poreux global correspondant aux différentes porosités décrites ci-dessus et mesuré par la méthode d'intrusion au mercure. Dans la suite de ce texte, on considérera que le volume poreux correspond au volume des pores de taille < 100 µm.

Il est généralement admis que la masse volumique en vrac d'une hydromagnésite standard est comprise entre 200 et 400 kg/m³. Les carbonates de calcium de synthèse ont quant à eux une masse volumique en vrac comprise habituellement entre 250 et 600 kg/m³.

Contre toute attente la phase solide mixte de carbonate de calcium et d'hydromagnésite de la composition selon l'invention présente une masse volumique en vrac inférieure à 250 kg/m³.

Ce résultat est d'autant plus surprenant qu'il permet d'atteindre des valeurs de conductivité thermique réduites de la phase solide mixte de la composition minérale suivant l'invention, de l'ordre de 25 à 45 mW/K/m, en particulier de l'ordre de 28 à 45 mW/K/m.

La phase solide mixte de la composition selon l'invention présente donc des particularités qui ne se retrouvent pas dans les phases pures habituelles de type hydromagnésite ou carbonate de calcium de synthèse.

L'explication résiderait dans le fait que la phase solide mixte de calcium et de magnésium présente une structure de cristallisation mixte qui permet le meilleur compromis entre porosité, degré d'agrégation et organisation des cristaux les uns par rapport aux autres. Ce compromis résulte en une faible masse volumique en vrac et ainsi en une faible conductivité thermique. Cet effet est, entre autre, obtenu par le procédé selon l'invention, spécialement aménagé pour atteindre les caractéristiques particulières de faible masse volumique en vrac et donc de faible conductivité thermique de la phase solide de la composition suivant l'invention. Ce procédé est décrit plus en détail ultérieurement et comprend une étape de carbonatation d'un hydroxyde mixte de calcium et de magnésium, qui permet de former une phase solide mixte de carbonates de calcium et de magnésium, contrôlés dans leur structure.

Dans une forme de réalisation de l'invention, ladite partie magnésienne de la composition minérale selon la présente invention peut comprendre en outre du périclase MgO et/ou de la brucite Mg(OH)₂. Les proportions de ces différents composants dans la phase solide mixte de la composition selon l'invention, en plus des carbonates de calcium de synthèse et de l'hydromagnésite, sont liées aux conditions opératoires et aux propriétés de la dolomie hydratée utilisée dans le procédé de carbonatation permettant l'obtention de la phase solide mixte de la composition selon l'invention décrit ultérieurement. Une dolomie totalement hydratée (dont l'hydratation a été réalisée sous pression pour éviter la présence résiduelle de MgO dans la dolomie hydratée) conduira à de plus fortes teneurs en Mg(OH)₂ dans la phase solide mixte de la composition selon l'invention que l'utilisation d'une dolomie partiellement hydratée, qui, elle, pourra conduire à la présence de MgO dans la phase solide mixte de la composition selon l'invention.

Dans une autre forme de réalisation de l'invention, la partie calcique de la composition suivant l'invention peut comprendre en outre de l'hydroxyde de calcium Ca(OH)₂, par exemple sous la forme de portlandite. Il faut noter que la partie calcique est toujours formée majoritairement en poids de calcite, d'aragonite ou d'un mélange des deux.

Dans une forme de réalisation avantageuse selon la présente invention, la phase solide mixte de ladite composition minérale présente une surface spécifique supérieure ou égale à 15 m²/g, plus particulièrement supérieure à 20 m²/g et de préférence supérieure ou égale à 25 m²/g, et pouvant aller jusqu'à 35 m²/g.

Par l'expression «surface spécifique » utilisée dans la présente invention, on entend la surface spécifique mesurée par manométrie d'adsorption d'azote et calculée selon le modèle de Brunauer, Emmett et Teller (méthode BET), après dégazage à 190°C.

La phase solide mixte de la composition selon l'invention présente donc un autre avantage inattendu en ce que sa surface spécifique est supérieure à celle des carbonates de calcium de synthèse habituels, qui présentent une surface spécifique de l'ordre de 4 à 15 m²/g.

Avantageusement, la composition selon la présente invention peut comprendre en outre une phase aqueuse, ladite composition étant alors sous forme de suspension ou de pâte. Elle peut aussi être sous forme solide, en particulier pulvérulente, et présenter un taux d'humidité compris entre 0 et 4 %, en particulier entre 0,1 et 4 %, de préférence inférieur ou égal à 3 %, plus particulièrement inférieur ou égal à 2 % en poids d'eau par rapport au poids total de la composition. Dans une forme de réalisation particulière de suspension, il est possible que les agglomérats soient dispersés.

Suivant une forme de réalisation de l'invention, ladite hydromagnésite est représentée par la formule Mg₅(CO₃)₄(OH)₂.4H₂O (ou indifféremment 4MgCO₃.Mg(OH)₂.4H₂O) et est présente à une teneur comprise entre 10 et 60 % en poids, de préférence supérieure ou égale à 20 % en poids, plus particulièrement supérieure ou égale à 30 % en poids, par rapport au poids de ladite phase solide mixte.

Avantageusement, ladite partie calcique est présente dans la composition suivant l'invention en une quantité allant de 35 à 75 %, avantageusement de 40 à 70 %, de préférence de 45 à 65 %, de manière plus préférentielle de 50 à 60 % en poids par rapport au poids total de la phase solide mixte. Le total de la partie magnésienne représente une quantité allant de 25 à 65 %, avantageusement de 30 à 60 %, de préférence de 35 à 55 % et de manière plus préférentielle de 40 % à 50 % du poids total de la phase solide mixte.

Dans une poudre sèche d'une composition préférentielle suivant l'invention on peut distinguer les composants suivants (en % massiques) :
- calcite CaCO₃ : 26 - 67 %
- aragonite CaCO₃ : 0 - 25 %
- portlandite Ca(OH)₂: 0 - 2 %
- hydromagnésite Mg₅(CO₃)₄(OH)₂.4H₂O : 13 - 54 %
- brucite Mg(OH)₂: 0 - 44 %, de préférence de 0 - 25 %
- périclase MgO : 0 - 5 %
- oxyhydroxyde de magnésium Mg₃O₂(OH)₂ : 0 - 5 %
avec au total 36 à 67 % de CaCO₃ et un total pour la partie magnésienne de 28 à 64 %.

Suivant l'invention, la phase solide mixte présente un rapport molaire Ca/Mg compris entre 0,4 et 1,2, en particulier entre 0,8 et 1,2.

La composition selon l'invention est soit sous la forme d'une poudre, soit sous la forme d'une suspension ou d'une pâte, dont une telle poudre peut provenir.

Préférentiellement, dans la composition minérale suivant l'invention, la masse volumique en vrac de la phase solide mixte est inférieure ou égale à 200 kg/m³, plus particulièrement inférieure ou égale à 180 kg/m³, voire inférieure ou égale à 160 kg/m³. De façon avantageuse, la masse volumique est supérieure ou égale à 90 kg/m³, en particulier supérieure ou égale à 100 kg/m³.

Dans une forme de réalisation avantageuse selon la présente invention, la phase solide mixte de ladite composition minérale présente une conductivité thermique comprise entre 25 et 45 mW/K/m, en particulier entre 28 et 45 mW/K/m. Cette conductivité est de préférence inférieure ou égale à 40 mW/K/m, plus particulièrement inférieure ou égale à 35 mW/K/m et de préférence inférieure ou égale à 32 mW/K/m.

Suivant une forme de réalisation avantageuse de l'invention, la phase solide mixte est présente en une proportion comprise dans la plage allant de 5 à 65 % en poids par rapport au poids total de la composition et un milieu liquide est présent en une proportion comprise dans la plage allant de 35 à 95 % en poids par rapport au poids total de la composition minérale.

Suivant une forme de réalisation particulière de l'invention, ladite phase solide mixte est composée d'agglomérats broyés en grains de taille inférieure ou égale à 2 mm, de préférence inférieure ou égale à 1 mm, de manière plus préférentielle inférieure ou égale à 200 µm et en particulier inférieure ou égale à 80 µm.

Suivant une forme de réalisation perfectionnée de l'invention, les agrégats de la phase solide mixte sont constitués d'un coeur calcique sur lequel sont agrégées des plaquettes d'hydromagnésite.

Dans une autre réalisation particulière de l'invention, les agrégats présentent une morphologie sensiblement sphérique.

Suivant une forme de réalisation de l'invention, les agrégats ont pour 80 % en volume une taille caractéristique de l'ordre de 1 à 40 µm, de préférence de 3 à 30 µm et en particulier de 5 à 20 µm sur la base des photos de MEB. Les plaquettes d'hydromagnésite ont pour 80 % en volume une largeur de plaquette de l'ordre de 0,5 à 10 µm, de préférence de 0,5 à 5 µm.

Les plaquettes d'hydromagnésite ne sont pas agrégées au hasard. Le plus souvent, les agrégats suivant l'invention présentent une forme générale analogue à celle d'une rose des sables.

Une poudre sèche d'une composition minérale préférentielle suivant l'invention pourra présenter les caractéristiques suivantes :
- masse volumique en vrac : 80- 250 kg/m³
- conductivité thermique : 25 - 45 mW/K/m
- surface spécifique BET : 15 - 35 m²/g
- volume des pores < à 100 µm : 1 - 5 cm³/g
- humidité : 0 - 4 %

La présente invention concerne également un procédé de fabrication d'une composition minérale à base d'une phase solide mixte de carbonates de calcium et de magnésium, comprenant
- i) une préparation de dolomie au moins partiellement hydratée par calcination d'une dolomie crue puis hydratation au moins partielle de la dolomie ainsi calcinée,
- ii) une mise en suspension dans une phase aqueuse de ladite dolomie au moins partiellement hydratée, cette suspension présentant une proportion comprise entre 5 et 15% en poids de matière solide par rapport au poids total de la suspension,
- iii) une carbonatation de ladite dolomie en suspension par injection d'un gaz contenant du CO₂ dans ladite suspension chauffée à une température de 55 à 90°C à un débit de CO₂ de 2,5 à 15 dm³/min/kg de ladite matière solide en suspension, avec une diminution par étapes du pH de la suspension jusqu'à une valeur inférieure à 9 et avec, en parallèle, successivement une diminution de la conductivité électrique de la suspension, puis une stabilisation de celle-ci et finalement une augmentation de la conductivité électrique stabilisée, la carbonatation étant stoppée dès que cette augmentation de conductivité électrique est observée,
iv) une obtention d'une phase solide mixte de carbonates de calcium et de magnésium de synthèse formée d'une partie calcique cristallisée et d'une partie magnésienne cristallisée sous forme de plaquettes, les cristaux de la partie calcique et ceux de la partie magnésienne étant agrégés sous forme d'agrégats composites, ces agrégats étant eux-mêmes au moins partiellement agglomérés sous la forme d'agglomérats, ladite partie calcique comprenant au moins un carbonate choisi parmi le groupe constitué de la calcite, de l'aragonite et de leurs mélanges, ladite partie magnésienne comprenant de l'hydromagnésite sous forme plaquettaire, ladite phase solide mixte de carbonates de ladite composition minérale présentant une masse volumique en vrac inférieure ou égale à 250 kg/m³, et supérieure ou égale à 80 kg/m³, mesurée selon la norme EN 459.2.

Au sens de la présente invention, on entend par stabilisation de la conductivité électrique, une période de plus de 15 minutes au cours de laquelle la conductivité électrique mesurée dans la suspension ne varie pas de plus de 0,5 mS/cm vers le haut ou vers le bas, de préférence une période de plus de 15 minutes au cours de laquelle la variation de conductivité est inférieure à 0,3 mS/cm vers le haut ou vers le bas, et avantageusement une période de 30 minutes au cours de laquelle la variation de conductivité électrique est inférieure à 0,3 mS/cm vers le haut ou vers le bas. Selon les conditions opératoires, cette phase de stabilisation peut être plus ou moins longue. Dans certaines variantes du procédé, elle peut durer jusqu'à 60 minutes, voire plus.

Suivant un mode particulier du procédé suivant l'invention, la dolomie crue se trouve, avant calcination, dans un produit minéral dolomitique en association avec une ou des substances calciques, une ou des substances magnésiennes ou un mélange de ces substances, en formant un rapport molaire Ca/Mg compris entre 0,8 et 1,2 dans le produit minéral dolomitique et la matière solide de la suspension obtenue après les étapes de calcination, hydratation et mise en suspension contient, outre des particules de dolomie au moins partiellement hydratée, des particules apparentées à celles-ci, issues des substances associées dans le produit minéral dolomitique.

Des produits dolomitiques variés se trouvent dans la nature et peuvent contenir notamment, outre de la dolomie crue, par exemple du carbonate de calcium, de la brucite ,... Il faut en outre noter que la dolomie crue naturelle, à laquelle on attribue d'une manière générale la formule Ca.Mg(CO₃)₂, peut varier dans ses teneurs respectives de Ca et de Mg.

Aussi, au sens de la présente invention, on entend par dolomie crue non seulement une dolomie de formule Ca.Mg(CO₃)₂ mais aussi un carbonate mixte de calcium et de magnésium d'origine naturelle de formule générale aCaCO₃.bMgCO₃, a et b étant des coefficients molaires tels que a/b = 0,8 à 1,2.

Aussi, ladite dolomie au moins partiellement hydratée est de formule générale aCa(OH)₂.xMg(OH)₂.yMgO dans laquelle a, x et y sont des coefficients molaires avec notamment 0,8 ≤ a/(x+y) ≤ 1,2 avec x+y=b. Elle est avantageusement une dolomie semi-hydratée dans laquelle la proportion massique de MgO résiduel est supérieure ou égale à 1 % en poids, avantageusement supérieure à 10 %, de préférence à 20 %, et qui est obtenue par calcination et hydratation conventionnelle de dolomie crue. L'utilisation d'une telle dolomie semi-hydratée permet de produire une composition minérale dans laquelle la phase solide mixte comprend de l'hydromagnésite et de la calcite et/ou de l'aragonite, les teneurs en brucite, en périclase et en portlandite étant faibles (chacune étant inférieure à 10%, avantageusement inférieure à 5% et de préférence à 2 % en poids de la phase solide mixte).

Dans une variante selon la présente invention, ladite dolomie au moins partiellement hydratée est une dolomie dite totalement hydratée dans laquelle la proportion massique de MgO résiduel est inférieure à 1 % en poids et qui est obtenue par calcination et hydratation sous pression de dolomie crue L'utilisation d'une telle dolomie totalement hydratée permet de produire une composition minérale dans laquelle la phase solide mixte comprend de l'hydromagnésite et de la calcite et/ou de l'aragonite, mais aussi une quantité non négligeable de brucite (jusqu'à 40 % en poids de la phase solide mixte dans certains cas), les teneurs en périclase et en portlandite restant toutefois faibles (chacune étant inférieure à 5 %, de préférence à 2 % en poids de la phase solide mixte).

Dans une autre variante du procédé selon l'invention, pour accroître la proportion de magnésium dans le composite final, une quantité prédéterminée de Mg(OH)₂ est ajoutée, préalablement à la carbonatation, à ladite dolomie au moins partiellement hydratée en suspension ou non, de manière à obtenir une phase solide mixte présentant un rapport molaire Ca/Mg compris entre 0,4 et 1,2. On peut également envisager d'ajouter de la même manière une quantité de MgO comprise entre 1 et 5 % en poids, par rapport au poids de la dolomie entièrement hydratée afin notamment de renforcer la morphologie sphérique des agrégats.

Il faut noter que la dolomie au moins partiellement hydratée de départ peut contenir une certaine fraction de CaCO₃, signe d'une calcination incomplète, et de CaO, en raison d'une extinction (hydratation) incomplète, ainsi que des impuretés.

L'hydratation au moins partielle de la dolomie peut être réalisée par voie sèche en ajoutant à une unité de masse de dolomie calcinée une quantité de phase aqueuse (généralement de l'eau, éventuellement un lait de chaux et/ou de dolomie, ou de l'eau avec des additifs), comprise entre 0,2 et 1,0 unité de masse, de préférence 0,4 à 0,8 unité de masse. Dans ce cas, le produit d'hydratation obtenu (à l'étape i)) est une poudre comprenant moins de 30 % d'humidité relative.

Cette hydratation au moins partielle peut aussi être réalisée par voie humide en ajoutant à une unité de masse de la dolomie calcinée une quantité de phase aqueuse, notamment d'eau, comprise entre 1,1 et 6 unités de masse, de préférence entre 2 et 5 unités de masse, plus particulièrement 4 unités de masse. Dans ce cas d'hydratation par voie humide, une variante du procédé selon l'invention consiste à effectuer, en une seule étape, l'hydratation de la dolomie calcinée présentant par exemple un rapport molaire Ca/Mg compris entre 0,8 et 1,2 par calcination d'une dolomie crue et ladite mise en suspension dans une phase aqueuse de ladite dolomie au moins partiellement hydratée, par extinction de ladite dolomie calcinée avec un excès suffisant d'eau afin d'obtenir directement ladite suspension.

Avantageusement, lors de la mise en suspension de la dolomie au moins partiellement hydratée on peut prévoir une proportion de 7 à 10 % en poids de matière solide par rapport au poids total de la suspension.

Dans une variante du procédé selon l'invention, l'étape i) ou ladite calcination d'une dolomie crue de l'étape i) ou encore l'étape i) et l'étape ii) sont effectuées préalablement et indépendamment des étapes suivantes, en particulier des étapes iii) et iv).

Après mise en suspension correspondant à l'étape ii), le procédé peut comprendre en outre un tamisage, notamment à une taille de particules égale ou inférieure à 250 µm ou un broyage, en particulier à une taille de particules inférieure ou égale à 90 µm de ladite dolomie au moins partiellement hydratée en suspension dans une phase aqueuse, éventuellement additionnée de MgO et/ou de Mg(OH)₂ avant carbonatation. Une dilution de la suspension peut également avoir lieu.

La composition selon l'invention peut comprendre en outre des additifs facilitant la préparation, la filtration, le stockage et/ou le broyage (la désagglomération) de la dite composition, en particulier afin d'améliorer la stabilité des suspensions selon l'invention.

La carbonatation de la dolomie en suspension est avantageusement effectuée à une température comprise entre 60 et 80°C, de préférence inférieure ou égale à 70°C, en particulier inférieure ou égale à 65°C.

Lors de cette étape on prévoit de préférence que le CO₂ soit injecté pur à 100 % en volume ou dilué dans un gaz porteur, en particulier de l'air, à une concentration volumique de CO₂ dans le gaz porteur de 15 à 50 %, en particulier de 15 à 25 %. Le débit total d'injection (gaz porteur éventuel et CO₂) peut avantageusement être de l'ordre de 15 à 55 dm³/min/kg de de matière solide en suspension. Le débit de CO₂ (gaz porteur exclus) est avantageusement compris entre 2,5 et 9,5 dm³/min/kg de matière solide en suspension.

L'augmentation de la conductivité électrique dans la suspension carbonatée, après la période de stabilisation, indique une formation de bicarbonate de magnésium MgHCO₃ soluble et le début d'une dissolution indésirée de l'hydromagnésite. La carbonatation est alors arrêtée. De façon générale, on observe que le pH est inférieur ou égal à 8,5.

Pendant la mise en suspension et la carbonatation, la suspension de dolomie peut avantageusement être maintenue sous agitation, par exemple à une vitesse de 350 à 650 rpm.

Suivant une forme de réalisation de l'invention, le procédé comprend en outre, une étape de séparation solide-liquide entre ladite phase solide mixte carbonatée et ladite phase aqueuse.

Cette phase solide mixte séparée peut ensuite être séchée. Avantageusement, la phase solide mixte peut être broyée ou désagglomérée pour obtenir des particules de taille inférieure ou égale à 2 mm, de préférence inférieure ou égale à 1 mm, de manière plus préférentielle inférieure ou égale à 200 µm et en particulier inférieure ou égale à 80 µm. L'opération de séchage peut être effectuée simultanément à celle de désagglomération ou de broyage.

Suivant une forme de réalisation de l'invention, le procédé comprend en outre un soutirage d'une quantité prédéterminée de suspension après carbonatation, une alimentation d'une suspension fraîche de dolomie semi-hydratée non carbonatée et une carbonatation ultérieure.

La présente invention concerne également une utilisation d'une composition minérale suivant l'invention ou telle qu'obtenue par le procédé suivant l'invention dans des matériaux de construction.

On peut envisager en particulier cette composition comme constituant de matériaux d'isolation thermique, en particulier dans des panneaux d'isolation thermique.

D'autres détails et particularités de l'invention ressortiront de la description donnée ci-après d'exemples non limitatifs, dans lesquels les pourcentages donnés sont massiques, lorsqu'ils ne sont pas précisés.

Les figures annexées illustrent la structure cristalline des compositions obtenues dans les exemples. Les figures ont la même numérotation que les exemples à deux agrandissements différents 2000 x (figures A) et 10.000 x (figures B), par microscopie électronique à balayage (MEB).

Dans les exemples, la masse volumique en vrac est mesurée d'après la norme EN 459.2. Lors de la mesure de la conductivité thermique, qui dépend du degré de tassement de l'échantillon, apparaît une seconde valeur de masse volumique non normalisée qu'il est impératif de mentionner afin de connaître les conditions de la mesure de conductivité thermique.

La conductivité thermique est mesurée sur un matériau en vrac en suivant les enseignements des normes ISO 8301 ou NF EN 12664. Plus précisément, la conductivité thermique telle que mentionnée dans la présente invention est mesurée sur la phase solide mixte de la composition minérale objet de la présente invention, c'est-à-dire sur une poudre préalablemet séchée à 105°C et dont la teneur en humidité est inférieure à 4 % en poids. Dans le cas où la composition selon l'invention se trouve sous la forme d'une suspension ou d'une pâte, ladite poudre est obtenue à partir de cette composition en suivant les étapes décrites plus haut dans la présente invention ou décrites dans les exemples.

La mesure est réalisée dans un appareil à fluxmètre (Netzsch Heat Flow Meter HFM 463/3/IE Lambda Series) sur une poudre en vrac placée dans un moule dont la taille est supérieure à la taille du fluxmètre. La préparation du lit de poudre dans le moule est telle que la surface du lit de poudre est la plus plate possible et que la masse volumique du lit de poudre sur lequel sera effectuée la mesure de conductivité thermique est égale à la masse volumique en vrac mesurée au préalable sur chaque poudre selon la méthode décrite dans la norme EN 459.2 à 20 % près, si possible à 15 % près. Une seule mesure est effectuée à 20 °C avec un écart de température de 20°C entre les deux faces de l'échantillon (soit 10°C pour une face et 30°C pour l'autre).

La surface spécifique est mesurée selon la méthode BET basée sur une mesure de manométrie d'adsorption d'azote après dégazage de l'échantillon à 190°C et le volume des pores < à 100 µm est mesuré par intrusion de mercure.

### Exemple 1 : carbonatation d'une dolomie semi-hydratée (4% Mg(OH)₂, 28 % MgO) à 70 °C.

### A/ La matière première

La dolomie semi-hydratée utilisée pour cet exemple a été préparée industriellement à partir de dolomie naturelle par calcination puis extinction dans un hydrateur industriel classique avec un faible excès d'eau (hydratation en voie sèche). D'après une analyse de thermogravimétrie complétée par une analyse chimique par spectrométrie de fluorescence X, cette dolomie semi-hydratée contient 45 % ± 0,5 % de Ca(OH)₂, 4 % ± 0,5 % de Mg(OH)₂ et 28 % ± 0,5 % de MgO. Elle contient également 15 % ± 0,5 % de CaCO₃ résiduel, la calcination de la dolomie ayant été incomplète, 5 % ± 0,5 % de CaO résiduel, l'hydratation de la dolomie ayant été incomplète, ainsi que des impuretés, exprimées notamment sous la forme de SiO₂, Al₂O₃, Fe₂O₃.... Cette dolomie a un rapport molaire Ca/Mg de 1,1.

### B/ Préparation du lait

Un lait de dolomie (suspension aqueuse de particules de dolomie semi-hydratée) est préparé en mélangeant 10 dm³ d'eau déminéralisée à 20°C avec 1100 g ± 15 g de dolomie semi-hydratée (soit une teneur en matière sèche de 10 % environ). Ce lait est maintenu sous agitation pendant 10 minutes avant d'être tamisé à 250 µm. Le lait passé au travers du tamis est alors introduit dans un réacteur d'une capacité de 12 dm³, équipé d'une double enveloppe et muni d'un système d'agitation et d'un système de chauffage. Ce réacteur est aussi équipé d'une sonde de pH, d'une sonde de conductivité électrique et d'une sonde de température. Le refus au tamisage (> 250 µm) est considéré comme un déchet de la réaction. Le lait est maintenu sous agitation et sa température est portée à 70 °C ± 2 °C.

### C/ Carbonatation

Lorsque le lait a atteint la température de 70 °C ± 2 °C, l'injection de CO₂ sous la forme d'un gaz composé de 15 % en volume de CO₂ et de 85 % en volume d'air est démarrée. Le gaz porteur de CO₂ est injecté par une buse qui se trouve dans le bas du réacteur. Les débits de gaz dans la suspension correspondent à 3,4 dm³/min de CO₂ et 19,6 dm³/min d'air par kg de dolomie semi-hydratée de départ. Pendant toute la carbonatation, la conductivité électrique du lait ainsi que son pH sont enregistrés. Le lait a un pH de 12,3 avant carbonatation. Au cours de celle-ci, la conversion des hydroxydes en carbonates s'accompagne a) d'une diminution du pH par étapes et b) d'une diminution, d'une phase stabilisée et finalement d'une augmentation de la conductivité électrique. La réaction est arrêtée lorsque la conductivité électrique commence à augmenter, cette augmentation intervenant simultanément à une chute du pH à moins de 9, dans ce cas 8,6. La conductivité électrique au début de la carbonatation était de 9,9 mS/cm, pendant la phase stabilisée elle était de 1,0-1,3 mS/cm et la réaction a été arrêtée à une conductivité électrique de 2,8 mS/cm.

L'augmentation de la conductivité électrique autour d'un pH de 8,6 (pH entre 7,5 et 9) indique une formation de bicarbonate de magnésium soluble et le début de la dissolution non désirée de l'hydromagnésite.

### D/ Traitements post-synthèse

A l'issue de la carbonatation, la suspension est filtrée sur büchner, placée dans une étuve à 105 °C pour un séchage d'une nuit, puis le solide séché est broyé afin d'obtenir une poudre de granulométrie inférieure à 2 mm et dont le taux d'humidité est inférieur à 3 %.

D'après une analyse thermogravimétrique et une analyse par diffraction des rayons X, le produit ainsi obtenu contient 54 ± 2 % de CaCO₃, quasiment exclusivement sous la forme de calcite (seulement des traces d'aragonite), 41 ± 2 % d'hydromagnésite, et aucune autre phase de type brucite, périclase, Mg₃O₂(OH)₂ ou encore portlandite en proportion significative. Sa masse volumique en vrac mesurée d'après la norme EN 459.2 est de 148 kg/m³. Sa surface spécifique est de 26,3 m²/g (méthode BET basée sur une mesure de manométrie d'adsorption d'azote) et le volume de ses pores < à 100 µm, mesuré par intrusion de mercure, est de 3,8 cm³/g. Sa conductivité thermique est de 37 mW/K/m pour une masse volumique au moment de la mesure de 163 kg/m³. Voir figures 1 A et 1 B.

### Exemple 2 : carbonatation d'une dolomie semi-hydratée (15 % Mg(OH)₂, 21 % MgO) à 70 °C.

Cet exemple est comparable à l'exemple 1. Les seules différences sont :
- la matière première a été remplacée par une autre dolomie semi-hydratée ayant une composition et une origine différentes,
- le réacteur utilisé pour la carbonatation est un réacteur d'un volume de 3 dm³ au lieu des 12 dm³ du réacteur décrit dans l'exemple 1, ce qui implique une adaptation des masses de réactifs et des débits de CO₂.

Tous les autres paramètres et toutes les autres étapes du procédé sont similaires à ceux décrits dans l'exemple 1.

### A/ La matière première

La dolomie semi-hydratée utilisée pour cet exemple a à nouveau été préparée industriellement à partir de dolomie naturelle par calcination puis extinction dans un hydrateur industriel classique avec un faible excès d'eau (hydratation en voie sèche). Cette dolomie semi-hydratée contient 41 % ± 0,5 % de Ca(OH)₂, 15 % ± 0,5 % de Mg(OH)₂ et 21 % ± 0,5 % de MgO. Elle contient également 19 % ± 0,5 % de CaCO₃ résiduel, la calcination de la dolomie ayant été incomplète, 2 % ± 0,5 % de CaO résiduel, l'hydratation de la dolomie ayant été incomplète, ainsi que des impuretés (SiO₂, Al₂O₃, Fe₂O₃...). Cette dolomie a un rapport molaire Ca/Mg de 1,0.

### B/ Préparation du lait

Cette fois, le lait est préparé en mélangeant 2 dm³ d'eau déminéralisée à 20 °C avec 270 g ± 5 g de dolomie semi-hydratée (soit une teneur en matière sèche de 12 % environ). Il est ensuite agité et tamisé comme décrit dans l'exemple 1. A l'issue de l'étape de tamisage, le lait passé au travers du tamis est introduit dans un réacteur d'une capacité de 3 dm³, à nouveau équipé d'une double enveloppe, muni d'un système d'agitation, d'un système de chauffage, d'une sonde de pH, d'une sonde de conductivité électrique et d'une sonde de température. Comme dans l'exemple 1, le lait est maintenu sous agitation et sa température est portée à 70 °C ± 2 °C.

### C/ Carbonatation

Comme dans l'exemple 1, la carbonatation se fait à 70 °C ± 2 °C. Les débits de gaz dans la suspension correspondent cette fois à 0,86 dm³/min de CO₂ et 4,90 dm³/min d'air. Le lait a un pH de 11,4 avant carbonatation. Au cours de celle-ci, la conversion des hydroxydes en carbonates s'accompagne a) d'une diminution du pH par étapes et b) d'une diminution, d'une phase stabilisée et finalement d'une augmentation de la conductivité électrique. La réaction est arrêtée lorsque la conductivité commence à réaugmenter après une chute simultanée du pH à 8,2. La conductivité électrique au début de la carbonatation était 8,2 mS/cm, pendant la phase stabilisée elle était de l'ordre de 1,0 mS/cm et la réaction a été arrêtée à une conductivité électrique de 1,8 mS/cm.

L'augmentation de la conductivité électrique autour d'un pH de 8,6 (ou moins) indique une formation de bicarbonate de magnésium soluble et le début de la dissolution non désirée de l' hydromagnésite.

### D/ Traitements post-synthèse

A l'issue de l'étape de carbonatation, la suspension est filtrée et le produit est séché dans les mêmes conditions que celles décrites dans l'exemple 1 ci-dessus, afin d'obtenir une poudre sèche (humidité inférieure à 3 %) et de granulométrie inférieure à 2 mm.

D'après une analyse quantitative par diffraction des rayons X confirmée par des résultats d'analyse thermogravimetrique, le produit ainsi obtenu contient 56 ± 1 % de CaCO₃, dont 41 ± 1 % sous la forme de calcite et 15 ± 1 % sous la forme d'aragonite, 42 ± 1 % d'hydromagnésite, 0,5 ± 0,5 % de brucite et 1,1 ± 0,5 % de portlandite. Sa masse volumique en vrac est de l'ordre de 188 kg/m³. Sa surface spécifique est de 27,3 m²/g et le volume de ses pores < à 100 µm est de 1,2 cm³/g. Sa conductivité thermique est de 38 mW/K/m pour une masse volumique au moment de la mesure de 188 kg/m³.
Voir figures 2A et 2B.

### Exemple 3 : carbonatation d'une dolomie semi-hydratée (31 % Mg(OH)₂ et 8 % MgO) à 70 °C.

L'exemple 3 est similaire à l'exemple 2, seule la matière première utilisée pour la carbonatation est différente, la dolomie semi-hydratée de l'exemple 2 étant remplacée par une autre dolomie semi-hydratée ayant des propriétés différentes.

Dans cet exemple, la dolomie semi-hydratée n'est plus un échantillon industriel. Elle a cette fois été préparée en laboratoire par hydratation d'une dolomie vive (obtenue par calcination industrielle d'une dolomie crue) en voie humide avec un large excès d'eau : 1 masse de dolomie vive et 5 masses d'eau déminéralisée à 70 °C sont mélangées pendant 10 minutes, ce qui conduit à l'obtention d'un lait de dolomie. Les particules solides contenues dans ce lait sont des particules de dolomie semi-hydratée contenant 55 % ± 0,5 % de Ca(OH)₂, 31 % ± 0,5 % de Mg(OH)₂ et 8 % ± 0,5 % de MgO. Elles contiennent également 3 % ± 0,5 % de CaCO₃ résiduel, la calcination de la dolomie ayant été incomplète, ainsi que des impuretés (SiO₂, Al₂O₃, Fe₂O₃...). Cette dolomie a un rapport molaire Ca/Mg de 1,1.

Le lait obtenu à l'issue des 10 minutes d'hydratation est tamisé à 250 µm. Le lait passé au travers du tamis est ensuite introduit dans le réacteur d'une capacité de 3 dm³ décrit dans l'exemple 2. Il est dilué avec de l'eau déminéralisée à 20 °C afin d'obtenir une teneur en matière sèche de l'ordre de 12 % dans le lait. La suite de la réaction est effectuée conformément aux informations de l'exemple 2. La carbonatation se fait à 70 °C ± 2 °C.

Le lait a un pH de 12,0 avant carbonatation. Au cours de celle-ci, la conversion des hydroxydes en carbonates s'accompagne a) d'une diminution du pH par étapes et b) d'une diminution, d'une phase stabilisée et finalement d'une augmentation de la conductivité électrique. La réaction est arrêtée lorsque la conductivité électrique commence à augmenter simultanément à une chute du pH à 8,6. La conductivité électrique au début de la carbonatation était de 7,0 mS/cm, pendant la phase stabilisée elle était de l'ordre de 0,5 mS/cm et la réaction a été arrêtée à une conductivité électrique de 1,4 mS/cm.

D'après une analyse quantitative par diffraction des rayons X confirmée par des résultats d'analyse thermogravimétrique, le produit obtenu après les étapes de filtration, séchage et broyage telles que décrites dans l'exemple 1, se présente sous la forme d'une poudre sèche contenant 53 ± 2 % de CaCO₃ quasiment exclusivement sous la forme de calcite (uniquement des traces d'aragonite), 45 ± 2 % d'hydromagnésite, 2,0 ± 1 % de portlandite. Sa masse volumique en vrac est de 181 kg/m³. Sa surface spécifique est de 28,9 m²/g et le volume de ses pores < à 100 µm est de 2,5 cm³/g. Sa conductivité thermique est de 39 mW/K/m pour une masse volumique au moment de la mesure de 187 kg/m³.
Voir figures 3A et 3B.

### Exemple 4 : carbonatation d'une dolomie totalement hydratée (39 % Mg(OH)₂ et moins de 1 % de MgO) à 70 °C.

L'exemple 4 est similaire à l'exemple 2, seule la matière première utilisée pour la carbonatation est différente, la dolomie semi-hydratée étant remplacée par une dolomie totalement hydratée.

La dolomie totalement hydratée est un produit industriel obtenu par calcination de dolomie crue suivie d'une hydratation sous pression. La dolomie totalement hydratée utilisée dans cet exemple contient 54 % ± 0,5 % de Ca(OH)₂, 39 % ± 0,5 % de Mg(OH)₂ et moins de 1 % ± 0,5 % de MgO résiduel. Elle contient également 5 % ± 0,5 % de CaCO₃ résiduel et moins de 1 % d'impuretés (SiO₂, Al₂O₃, Fe₂O₃...). Cette dolomie a un rapport molaire Ca/Mg de 1,1.

Le lait préparé selon les indications de l'exemple 2 a un pH de 12,2 avant carbonatation. La carbonatation se fait à 70 °C. Au cours de celle-ci, la conversion des hydroxydes en carbonates s'accompagne a) d'une diminution du pH par étapes et b) d'une diminution, d'une phase stabilisée et finalement d'une augmentation de la conductivité électrique. La réaction est arrêtée lorsque la conductivité électrique commence à augmenter simultanément à une chute du pH à 8,8. La conductivité électrique au début de la carbonatation était de 9,6 mS/cm, pendant la phase stabilisée elle était de l'ordre de 1,4 mS/cm et la réaction a été arrêtée à une conductivité électrique de 2,0 mS/cm.

D'après une analyse quantitative par diffraction des rayons X confirmée par des résultats d'analyse thermogravimétrique, le produit obtenu après les étapes de filtration, séchage et broyage telles que décrites dans l'exemple 1, se présente sous la forme d'une poudre sèche contenant 54 ± 1 % de CaCO₃, quasiment exclusivement sous la forme de calcite (uniquement des traces d'aragonite), 40 ± 1 % d'hydromagnésite, 5 ± 1 % de brucite et 1,0 ± 0,5 % de portlandite. Sa masse volumique en vrac est de 161 kg/m³. Sa surface spécifique est de 27,3 m²/g et le volume de ses pores < à 100 µm est de 3,7 cm³/g. Sa conductivité thermique est de 36 mW/K/m pour une masse volumique au moment de la mesure de 151 kg/m³.
Voir figures 4A et 4B.

### Exemple 5 : carbonatation d'une dolomie totalement hydratée (39 % Mg(OH)₂ et moins de 1 % de MgO) avec ajout de MgO à 70 °C.

L'exemple 5 est similaire à l'exemple 4, la matière première et le procédé étant identiques à ceux décrits dans l'exemple 4. La seule différence avec cet exemple 4 est que, cette fois, une faible quantité de MgO a été ajoutée dans le lait de dolomie totalement hydratée avant l'injection de CO₂. La proportion de MgO correspond à 3 % de la masse de dolomie hydratée. Le MgO a été obtenu par calcination pendant 2h à 400 °C d'un Mg(OH)₂ commercial en poudre.

D'après une analyse quantitative par diffraction des rayons X confirmée par des résultats d'analyse thermogravimétrique, le produit obtenu après les étapes de filtration, séchage et broyage telles que décrites dans l'exemple 1, se présente sous la forme d'une poudre sèche contenant 54 ± 2 % de CaCO₃, quasiment exclusivement sous la forme de calcite (uniquement des traces d'aragonite), 46 ± 2 % d'hydromagnésite, et aucune autre phase en proportion significative. Sa masse volumique en vrac est de 158 kg/m³. Sa surface spécifique est de 25,4 m²/g et le volume de ses pores < à 100 µm est de 2,6 cm³/g. Sa conductivité thermique est de 36 mW/K/m pour une masse volumique au moment de la mesure de 156 kg/m³.
Voir figures 5A et 5B.

### Exemple 6 : carbonatation de dolomie semi-hydratée (15 % Mg(OH)₂, 21 % MgO) à plus basse température (60 °C).

### A/ La matière première :

La dolomie semi-hydratée utilisée pour cet exemple est la même que celle utilisée dans l'exemple 2 (rapport molaire Ca/Mg = 1,0).

### B/ Préparation du lait :

Un lait de dolomie est préparé en mélangeant 10,2 dm³ d'eau déminéralisée à 20 °C avec 770 g ± 5 g de dolomie semi-hydratée (soit une teneur en matière sèche de 7 %). Ce lait est ensuite maintenu sous agitation pendant une dizaine de minutes, puis broyé et désaggloméré à l'aide d'un agitateur de type Ultra Turrax (marque IKA) pendant 30 secondes afin de réduire la taille des agglomérats en suspension en dessous de 90 µm. Le lait ainsi préparé est alors introduit dans le réacteur de capacité de 12 dm³ décrit dans l'exemple 1. Le lait est maintenu sous agitation et sa température est portée à 60 °C ± 2 °C.

### C/ Carbonatation :

Lorsque le lait a atteint la température de 60 °C ± 2 °C, l'injection de CO₂ sous la forme d'un gaz composé de 20 % en volume de CO₂ et de 80 % en volume d'air est démarrée. Le gaz porteur de CO₂ est injecté par une buse qui se trouve dans le bas du réacteur. Les débits de gaz dans la suspension correspondent à 3,0 dm³/min de CO₂ et 12,0 dm³/min d'air par kg de dolomie semi-hydratée de départ. Le lait a un pH de 12,1 avant carbonatation. Au cours de celle-ci, la conversion des hydroxydes en carbonates s'accompagne a) d'une diminution du pH par étapes et b) d'une diminution, d'une phase stabilisée et finalement d'une augmentation de la conductivité électrique. La réaction est arrêtée lorsque la conductivité électrique commence à augmenter simultanément à une chute du pH à 8,5. La conductivité électrique au début de la carbonatation était de 10,1 mS/cm, pendant la phase stabilisée elle était de l'ordre de 3,9 mS/cm et la réaction a été arrêtée à une conductivité électrique de 4,5 mS/cm.

### D/ Traitements post-synthèse :

Les traitements post-synthèse effectués pour cet échantillon sont similaires à ceux effectués dans les exemples 1 à 5 et permettent l'obtention d'une poudre sèche.

D'après une analyse quantitative par diffraction des rayons X, le produit ainsi obtenu contient 58 ± 1 % de CaCO₃, dont 43 ± 1 % sous la forme de calcite et 16 ± 1 % sous la forme d'aragonite, 38 ± 1 % d'hydromagnésite, 2 ± 1 % de brucite, 1 ± 0,5 % de portlandite et 0,5 ± 0,5 % de Mg₃O₂(OH)₂. Sa masse volumique en vrac est de 146 kg/m³. Sa surface spécifique est de 25,0 m²/g. Sa conductivité thermique est de 39 mW/K/m pour une masse volumique au moment de la mesure de 189 kg/m³.
Voir figures 6A et 6B.

### Exemple 7 : carbonatation de dolomie semi-hydratée (15 % Mg(OH)₂, 21 % MgO) avec ajout de Mg(OH)₂ à 75 °C ± 2 °C.

Cet exemple est tout à fait similaire à l'exemple 6, mis à part que, cette fois, les 770 g de dolomie semi-hydratée utilisés pour préparer le lait de dolomie ont été remplacés par un mélange de 534 g de cette même dolomie semi-hydratée et de 236 g de Mg(OH)₂ commercial en suspension aqueuse à 50 %, de façon à obtenir la même teneur en solide totale que dans l'exemple 6. Cela conduit à un rapport molaire Ca/Mg de 0,5 dans la phase solide de la suspension.

Par ailleurs, contrairement à l'exemple 6, la réaction de carbonatation est ici réalisée à 75 °C ± 2 °C. La suspension a un pH de 11,8 avant carbonatation.

Comme dans l'exemple 6, le réacteur de 12 dm³ est utilisé. Lorsque la suspension a atteint une température de 75 °C ± 2 °C, l'injection d'un gaz contenant 20 % en volume de CO₂ et le reste d'air commence. Les débits de gaz dans la suspension correspondent à 2,6 dm³/min de CO₂ et 10,4 dm³/min d'air par kilogramme de matière solide en suspension (dolomie et Mg(OH)₂).

Au cours de la carbonatation, la conversion des hydroxydes en carbonates s'accompagne a) d'une diminution du pH par étapes et b) d'une diminution, d'une phase stabilisée et finalement d'une augmentation de la conductivité électrique. La conductivité électrique au début de la carbonatation était de 10,0 mS/cm, pendant la phase stabilisée, elle était de l'ordre de de 2,3 mS/cm et la réaction est arrêtée à une conductivité de 2,9 mS/cm.

D'après une analyse quantitative par diffraction des rayons X, le produit obtenu après les étapes de filtration, séchage et broyage telles que décrites dans l'exemple 1, se présente sous la forme d'une poudre sèche contenant 39 ± 1 % de CaCO₃, dont 35 ± 1 % sous la forme de calcite et 4 ± 1 % sous la forme d'aragonite, 26 ± 2 % d'hydromagnésite, 33 ± 2 % de brucite, 1 ± 0,5 % de portlandite et 1,0 ± 0,5 % de périclase. Sa masse volumique en vrac est de 132 kg/m³. Sa surface spécifique est de 18 m²/g. Sa conductivité thermique est de 37 mW/K/m pour une masse volumique au moment de la mesure de 154 kg/m³.
Voir figures 7a et 7B.

### Exemple 8 : carbonatation à 70 °C ± 2 °C d'un produit dolomitique calciné.

Cet exemple est comparable à l'exemple 3. Seule la matière première est différente, ainsi que quelques détails du procédé.

Dans cet exemple, un produit naturellement composé de dolomie (CaCO₃.MgCO₃), de calcaire (CaCO₃) et de brucite (Mg(OH)₂), ayant un rapport molaire Ca/Mg de 1,0, a été calciné dans un four de laboratoire à 980 °C de manière à obtenir un oxyde mixte à base de CaO et de MgO, contenant de faibles quantités de CaCO₃ résiduel. Cet oxyde a ensuite été hydraté en laboratoire en voie humide avec un large excès d'eau : 1 masse d'oxyde et 7 masses d'eau déminéralisée à 20 °C sont mélangées pendant 30 minutes, conduisant à l'obtention d'un lait, les particules solides contenues dans ce lait étant apparentées à des particules de dolomie semi-hydratée.

Contrairement à l'exemple 3, le lait n'est pas tamisé. Comme il a déjà une teneur en matière sèche de l'ordre de 12 %, il n'est pas non plus dilué. La carbonatation peut être directement effectuée dans le réacteur de 3 dm³ selon les conditions de l'exemple 3.

Le lait a un pH de 12,6 avant carbonatation. La carbonatation se fait à 70 °C ± 2 °C. Au cours de celle-ci, la conversion des hydroxydes en carbonates s'accompagne a) d'une diminution du pH par étapes et b) d'une diminution, d'une phase stabilisée et finalement d'une augmentation de la conductivité électrique. La réaction est arrêtée lorsque la conductivité électrique commence à augmenter simultanément à une chute du pH à 8,5. La conductivité électrique au début de la carbonatation était de 8,0 mS/cm, pendant la phase stabilisée elle était de l'ordre de 1,2 mS/cm et la réaction a été arrêtée à une conductivité électrique de 2,5 mS/cm.

Le produit obtenu après les étapes de filtration, séchage et broyage telles que décrites dans l'exemple 1, se présente sous la forme d'une poudre sèche. Sa masse volumique en vrac est de 157 kg/m³. Sa surface spécifique est de 19,6 m²/g et le volume de ses pores < à 100 µm, est de 3,5 cm³/g. Sa conductivité thermique est de 36 mW/K/m pour une masse volumique au moment de la mesure de 168 kg/m³.
Voir figures 8A et 8B.

### Exemple 9 : carbonatation à 70 °C ± 2 °C de dolomie semi-hydratée (15 % Mg(OH)₂ et 21 % MgO) à l'échelle pilote.

L'exemple 9 est similaire à l'exemple 2, mais la réaction a été réalisée dans un réacteur de 100 dm³ au lieu du réacteur de 3 dm³ utilisé dans l'exemple 2. Cette fois, le lait est préparé en mélangeant 80 dm³ d'eau déminéralisée à 20 °C avec 9,6 kg de la dolomie semi-hydratée décrite dans l'exemple 2 (soit une teneur en matière sèche dans le lait de 10,7 %). Le reste du procédé de synthèse décrit dans l'exemple 2 reste inchangé. Seuls les débits de CO₂ sont adaptés afin de réaliser la carbonatation des 9,6 kg de dolomie semi-hydratée en un temps proche de celui utilisé pour la carbonatation des 240 g de dolomie semi-hydratée dans le réacteur de 3 dm³ de l'exemple 2, c'est-à-dire environ 3 heures : 55 dm³/min de CO₂ et 314 dm³/min d'air par kg de dolomie semi-hydratée de départ.

Le produit obtenu après les étapes de filtration, séchage et broyage telles que décrites dans l'exemple 1, se présente sous la forme d'une poudre sèche. D'après une analyse quantitative par diffraction des rayons X, confirmée par une analyse thermogravimétrique, ce produit contient 57 ± 1 % de CaCO₃, dont 52 ± 1 % sous la forme de calcite et 5 ± 1 % sous la forme d'aragonite, 42 ± 1 % d'hydromagnésite et 1 ± 0,5 % de portlandite. Sa masse volumique en vrac est de 188 kg/m³. Sa surface spécifique est de 25,6 m²/g et le volume de ses pores < à 100 µm est de 1,2 cm³/g. Sa conductivité thermique est de 39 mW/K/m pour une masse volumique au moment de la mesure de 220 kg/m³.
Voir figures 9A et 9B.

### Exemple 10 : carbonatation de dolomie semi-hydratée et broyage du carbonate.

L'exemple 10 est similaire à l'exemple 2, mais à l'issue de l'étape de séchage, le produit est broyé afin d'atteindre une granulométrie non plus < à 2 mm, mais < à 80 µm.

La composition minéralogique de cette poudre est similaire à celle de la poudre de 2 mm obtenue dans l'exemple 2, tout comme sa surface spécifique. En revanche, le broyage permet d'augmenter le volume des pores < 100 µm de 1,2 à 2,6 cm³/g et la distribution en taille de ces pores est nettement modifiée, les pores étant plus larges après broyage. La masse volumique en vrac du produit est quant à elle nettement diminuée en comparaison de la poudre de 2 mm, tout comme sa conductivité thermique : masse volumique en vrac de 118 kg/m³ et conductivité de 32 mW/K/m pour une masse volumique de 148 kg/m³ au moment de la mesure.
Voir figures 10A et 10B.

### Exemple 11

Dans le cadre de l'optimisation du produit et du procédé objets de la présente invention, un plan d'expériences a été réalisé. Ce plan d'expériences porte sur l'optimisation de l'étape de carbonatation d'une suspension aqueuse dans un réacteur d'une capacité de 100 dm³, réacteur qui avait déjà été utilisé dans l'exemple 9. Quatre paramètres sont étudiés : i) la proportion volumique de CO₂ dans la phase gazeuse (de 13,9 à 46,1 %), ii) le débit de CO₂ par rapport à la masse de dolomie au moins partiellement hydratée à carbonater (de 3,8 à 12,9 dm³/min/kg de dolomie), iii) l'extrait sec du lait de dolomie avant carbonatation (de 5,2 à 14,8 %) et iv) la température de carbonatation (de 57 à 73 °C).

Pour l'ensemble des expériences, une étape d'hydratation d'une dolomie vive de calibre inférieur à 3 mm est réalisée dans un premier temps dans un réacteur de 40 dm³ dans les conditions suivantes : température initiale de l'eau d'hydratation fixée à 54 °C, rapport massique eau/dolomie de 3,2 (soit un extrait sec initial de 23,8 %) et une vitesse d'agitation de 275 rpm. La durée de l'hydratation est de 30 à 40 minutes.

A l'issue de l'hydratation, le lait de dolomie obtenu est tamisé à 200 µm. Le lait passant à 200 µm est ensuite dilué avec de l'eau afin d'ajuster l'extrait sec du lait de dolomie au moins partiellement hydratée à la valeur souhaitée et afin d'obtenir un volume total de 80 dm³ de lait de dolomie. Ces 80 dm³ de lait dilué sont alors introduits dans le réacteur de carbonatation de 100 dm³. La température du lait est ensuite amenée à la température souhaitée pour la carbonatation en faisant circuler un liquide de température contrôlée dans la double enveloppe du réacteur de 100 dm³. Cette température est maintenue constante pendant toute la durée de la carbonatation à ± 2 °C. Lorsque la température du lait de dolomie est stabilisée, l'injection de la phase gazeuse (air + CO₂) commence. Au préalable, les régulateurs de débit de CO₂ et d'air ont été réglés afin de pouvoir se placer dans les conditions souhaitées de débit de CO₂ par rapport à la masse de dolomie au moins partiellement hydratée à carbonater et de proportion volumique de CO₂ dans la phase gazeuse. Pendant la carbonatation, le pH de la suspension ainsi que sa conductivité électrique sont enregistrés. On peut observer une diminution par étape du pH jusqu'à une valeur inférieure à 9 avec, en paralèlle, successivement une diminution de la conductivité éléctrique, une phase de stabilisation telle que définie plus haut et finalement une augmentation de la conductivité électrique de la suspension. La carbonatation est arrêtée lorsque la conductivité électrique commence à augmenter à la fin de la phase de stabilisation.

A la fin de la réaction de carbonatation, la suspension est récupérée et, dans un premier temps, la taille des particules en suspension est mesurée par granulométrie laser en plaçant quelques gouttes de la suspension dans du méthanol (d₁₀, d₅₀, d₉₀ dans le tableau ci-dessous). Puis, une partie de la suspension est filtrée sur büchner, séchée en étuve à 70 °C pendant 2 à 3 jours avant d'être finalement broyée à une taille inférieure à 2 mm (100 % de passant dans une maille de tamis de 2 mm). Sur ce produit broyé, sont mesurées la masse volumique en vrac d'après la méthode décrite dans EN459-2, la conductivité thermique, la surface spécifique BET et la proportion d'hydromagnésite d'après les résultats de thermogravimétrie (rampe de température depuis la température ambiante jusqu'à 950 °C, à raison de 5 °C/min sous azote). Quelques résultats correspondant aux conditions opératoires extrêmes de ce plan d'expériences sont indiqués dans le tableau ci-dessous.

Puis, deux autres essais de carbonatation ont été réalisés dans des conditions tout à fait comparables mais en ajustant les conditions de carbonatation aux conditions optimales déterminées lors du plan d'expériences. Les conditions opératoires et les résultats de ces deux essais sont repris dans les deux dernières lignes du tableau ci-dessous et montrent que les conditions déterminées d'après le plan d'expériences sont bien les meilleures puisqu'elles ont permis la synthèse de produits de plus faible masse volumique en vrac et de plus faible conductivité thermique.

De manière générale, sur la base notamment des résultats présentés dans ce tableau, on observe une relation entre la taille des particules en suspension mesurée par granulométrie laser et la conductivité thermique mesurée sur la poudre issue de ladite suspension. Globalement, la conductivité thermique a tendance à être d'autant plus faible que les particules en suspension sont grossières.

| Conditions opératoires | | | | Résultats | | | | | | |
|---|---|---|---|---|---|---|---|---|---|---|
| Concentration de CO₂ dans la phase gazeuse (% vol.) | Débit de CO₂ (dm³/min/kg dolomie) | Extrait sec de la suspension avant carbonatation (% mass.) | Température (°C) | % Hydromagnésite | Masse volumique en vrac (kg/m³) | Surface spécifique (m²/g) | d10 (µm) | d50 (µm) | d90 (µm) | Conductivité thermique (mW/K/m) |
| Les extrêmes du plan d'expériences | | | | | | | | | | |
| **13,9** | 6,5 | 10 | 65 | 45,4 | 180,4 | 26,1 | 2,9 | 7,3 | 12,3 | 39,1 |
| **46,1** | 6,5 | 10 | 65 | 46,1 | 112,3 | 25,5 | 4,4 | 12,1 | 21,8 | 35,6 |
| 40 | **3,8** | 13 | 60 | 35,6 | 135,3 | 25,6 | 4,0 | 9,6 | 17,0 | 36,6 |
| 30 | **12,9** | **5,2** | 65 | 42,7 | 193,4 | 20,4 | 3,9 | 11,8 | 21,4 | 38,6 |
| 30 | 4,3 | **14,8** | 65 | 40,6 | 159,8 | 28,2 | 3,2 | 7,2 | 11,9 | 38,9 |
| 30 | 6,5 | 10 | **57** | 46,9 | 126,6 | 26,8 | 4,1 | 10,3 | 19,6 | 35,7 |
| 30 | 6,5 | 10 | **73** | 43,7 | 121,7 | 24,1 | 4,5 | 11,2 | 20,5 | 36,0 |

| Nouvelles synthèses selon conditions optimisées par le plan d'expériences | | | | | | | | | | |
|---|---|---|---|---|---|---|---|---|---|---|
| 40 | 5,9 | 8,1 | 55 | 45,6 | **117,6** | 22,4 | 6,3 | 25,5 | 88,2 | **34,8** |
| 20 | 6,9 | 7,8 | 60 | 43,5 | **97,0** | 23,5 | 7,0 | 26,9 | 60,2 | **33,5** |

Il doit être entendu que l'invention n'est en aucune façon limitée à ces exemples et que bien des modifications peuvent y être apportées dans le cadre des revendications annexées.

## Revendications

1. Composition minérale à base d'une phase solide mixte de carbonates de calcium et de magnésium de synthèse, formée d'une partie calcique cristallisée et d'une partie magnésienne cristallisée sous forme de plaquettes, les cristaux de la partie calcique et ceux de la partie magnésienne étant agrégés sous forme d'agrégats composites, ces agrégats étant eux-mêmes au moins partiellement agglomérés sous forme d'agglomérats, ladite partie calcique comprenant au moins un carbonate choisi parmi le groupe constitué de la calcite, de l'aragonite et de leurs mélanges, ladite partie magnésienne comprenant de l'hydromagnésite sous forme plaquettaire, ladite phase solide mixte de carbonates de ladite composition minérale présentant une masse volumique en vrac inférieure ou égale à 250 kg/m³, et supérieure ou égale à 80 kg/m³, mesurée selon la norme EN 459.2.

2. Composition minérale selon la revendication 1, dans laquelle la partie magnésienne comprend en outre un ou plusieurs autres composés magnésiens choisis dans le groupe constitué du périclase, de l'oxyhydroxyde de magnésium et de la brucite.

3. Composition minérale selon la revendication 1 ou la revendication 2, dans laquelle la partie calcique comprend en outre de l'hydroxyde de calcium, par exemple sous forme de portlandite.

4. Composition minérale selon l'une quelconque des revendications 1 à 3, dans laquelle la phase solide mixte de ladite composition minérale présente une surface spécifique mesurée par manométrie d'adsorption d'azote et calculée selon la méthode BET supérieure ou égale à 15 m²/g.

5. Composition minérale selon l'une quelconque des revendications précédentes, comprenant en outre une phase aqueuse, ladite composition minérale étant sous forme de suspension ou de pâte.

6. Composition minérale selon l'une quelconque des revendications 1 à 4, dans laquelle ladite composition minérale est sous forme solide, en particulier pulvérulente, et présente un taux d'humidité compris entre 0 et 4 % en poids d'eau par rapport au poids total de la composition.

7. Composition minérale selon l'une quelconque des revendications 1 à 6, dans laquelle ladite hydromagnésite est représentée par la formule Mg₅(CO₃)₄(OH)₂.4H₂O et est présente à une teneur comprise entre 10 et 60% en poids par rapport au poids de ladite phase solide mixte.

8. Composition minérale selon l'une quelconque des revendications 1 à 7, dans laquelle la partie calcique est présente en une quantité allant de 35 à 75 % en poids par rapport au poids total de la phase solide mixte et dans laquelle la partie magnésienne est présente en une quantité allant de 25 à 65 % en poids par rapport au poids total de la phase solide mixte.

9. Composition minérale selon l'une quelconque des revendications 1 à 8, dans laquelle la phase solide mixte présente un rapport molaire Ca/Mg compris entre 0,4 et 1,2.

10. Composition minérale selon l'une quelconque des revendications 1 à 5 et 7 à 9, dans laquelle la phase solide mixte est présente en une proportion comprise dans la plage allant de 5 à 65 % en poids par rapport au poids total de la composition et dans laquelle un milieu liquide est présent en une proportion comprise dans la plage allant de 35 à 95 % en poids par rapport au poids total de la composition minérale.

11. Composition minérale selon l'une quelconque des revendications 1 à 10, dans laquelle la masse volumique en vrac de la phase solide mixte est inférieure ou égale à 200 kg/m³ ou supérieure ou égale à 100 kg/m³.

12. Composition minérale selon l'une quelconque des revendications 1 à 11, dans laquelle la conductivité thermique de la phase solide mixte est comprise entre 25 et 45 mW/K/m,

13. Composition minérale selon l'une quelconque des revendications 1 à 12, dans laquelle ladite phase solide mixte est composée d'agglomérats broyés en particules de taille inférieure ou égale à 2 mm.

14. Composition minérale suivant l'une quelconque des revendications 1 à 13, **caractérisée en ce que** les agrégats de la phase solide mixte sont constitués d'un coeur calcique sur lequel sont agrégées des plaquettes d'hydromagnésite.

15. Procédé de fabrication d'une composition minérale à base d'une phase solide mixte de carbonates de calcium et de magnésium, comprenant
- i) une préparation de dolomie au moins partiellement hydratée par calcination d'une dolomie crue puis hydratation au moins partielle de la dolomie ainsi calcinée,
- ii) une mise en suspension dans une phase aqueuse de ladite dolomie au moins partiellement hydratée, cette suspension présentant une proportion comprise entre 5 et 15 % en poids de matière solide par rapport au poids total de la suspension,
- iii) une carbonatation de ladite dolomie en suspension par injection d'un gaz contenant du CO₂ dans ladite suspension chauffée à une température de 55 à 90 °C à un débit de CO₂ de 2,5 à 15 dm³/min/kg de ladite matière solide de la suspension, avec une diminution par étapes du pH de la suspension jusqu'à une valeur inférieure à 9 et avec, en parallèle, successivement une diminution de la conductivité électrique de la suspension, puis une stabilisation de celle-ci et finalement une augmentation de la conductivité électrique stabilisée, la carbonatation étant stoppée dès que cette augmentation de conductivité électrique est observée,
- iv) une obtention d'une phase solide mixte de carbonates de calcium et de magnésium de synthèse formée d'une partie calcique cristallisée et d'une partie magnésienne cristallisée sous forme de plaquettes, les cristaux de la partie calcique et ceux de la partie magnésienne étant agrégés sous forme d'agrégats composites, ces agrégats étant eux-mêmes au moins partiellement agglomérés sous la forme d'agglomérats, ladite partie calcique comprenant au moins un carbonate choisi parmi le groupe constitué de la calcite, de l'aragonite et de leurs mélanges, ladite partie magnésienne comprenant de l'hydromagnésite sous forme plaquettaire, ladite phase solide mixte de carbonates de ladite composition minérale présentant une masse volumique en vrac inférieure ou égale à 250 kg/m³, et supérieure ou égale à 80 kg/m³, mesurée selon la norme EN 459.2.

16. Procédé suivant la revendication 15, **caractérisé en ce que** la dolomie crue se trouve, avant calcination, dans un produit minéral dolomitique en association avec une ou des substances calciques, une ou des substances magnésiennes ou un mélange de ces substances en formant un rapport molaire Ca/Mg compris entre 0,8 et 1,2 dans le produit minéral dolomitique et **en ce que** la matière solide de la suspension obtenue après les étapes de calcination, hydratation et mise en suspension contient, outre des particules de dolomie au moins partiellement hydratée, des particules apparentées à celles-ci, issues des substances associées dans le produit minéral dolomitique.

17. Procédé suivant l'une des revendication 15 et 16, **caractérisé en ce que** la calcination de la dolomie crue est partielle et **en ce que** la matière solide de la suspension contient une fraction de CaCO₃.

18. Procédé selon l'une des revendications 15 à 17, comprenant en outre une étape d'addition de MgO et/ou de Mg(OH)₂ à ladite dolomie au moins partiellement hydratée en suspension ou non, de manière à obtenir une phase solide mixte présentant un rapport molaire Ca/Mg compris entre 0,4 et 1,2.

19. Procédé suivant l'une quelconque des revendications 15 à 18, **caractérisé en ce que** l'hydratation de la dolomie calcinée et la mise en suspension dans une phase aqueuse de la dolomie hydratée sont effectuées en une seule étape par extinction de la dolomie calcinée avec un excès d'eau.

20. Procédé selon l'une des revendications 15 à 19, comprenant en outre, dans ladite suspension carbonatée, une étape de séparation solide-liquide entre ladite phase solide mixte carbonatée et ladite phase aqueuse.

21. Procédé selon la revendication 20, dans lequel ladite phase solide mixte est ensuite séchée.

22. Procédé selon l'une quelconque des revendications 15 à 21, dans lequel ladite phase solide mixte est broyée pour obtenir des particules de taille inférieure ou égale à 2 mm.

23. Procédé selon l'une quelconque des revendications 15 à 22, dans lequel ladite température de carbonatation est comprise entre 60 et 80°C.

24. Procédé suivant l'une quelconque des revendications 15 à 23, **caractérisé en ce que** le gaz injecté dans ladite suspension contient du CO₂ à une concentration de 10 à 100 % en volume.

25. Procédé selon l'une quelconque des revendications 15 à 24, comprenant en outre un tamisage à une taille de particules égale ou inférieure à 250 µm ou un broyage à une taille de particules inférieure ou égale à 90 µm de ladite matière solide de la suspension destinée à la carbonatation..

26. Utilisation d'une composition selon l'une quelconque des revendications 1 à 14, ou d'une composition obtenue selon le procédé suivant l'une quelconque des revendications 15 à 21, dans des matériaux de construction.

27. Utilisation d'une composition selon la revendication 26, comme constituant de matériaux d'isolation thermique, en particulier dans des panneaux d'isolation thermique.

## Patentansprüche

1. Mineralzusammensetzung aus einem gemischten Festoffen aus synthetischem Kalzium- und Magnesiumkarbonat, geformt aus einem kristallisierten Kalzium enthaltenden Anteil und einem kristallisierten Magnesium enthaltenden Anteil in Form von Plättchen, wobei die Kristalle des Kalzium enthaltenden Anteils und jene des Magnesium enthaltenden Anteils in Form von gemischten Aggregaten verfestigt sind, wobei diese Aggregate wiederum zumindest teilweise in Form von Agglomeraten zusammengeballt sind, wobei der erwähnte Kalzium enthaltende Anteil zumindest ein Karbonat aus der Gruppe bestehend aus Kalzit, Aragonit und deren Mischungen umfasst, wobei der erwähnte Magnesium enthaltende Anteil Hydromagnesit in Plättchenform umfasst, wobei die erwähnte gemischte Feststoff aus Karbonaten der erwähnten Mineralzusammensetzung eine Schüttdichte von weniger als oder gleich 250 kg/m³ und mehr als oder gleich 80 kg/m³, gemessen nach der Norm EN459.2, aufweist.

2. Mineralzusammensetzung nach Anspruch 1, in der der Magnesiumanteil ferner eine oder mehrere andere Magnesiumverbindungen aus der Gruppe bestehend aus Periklas, Magnesiumoxid-hydroxid und Brucit umfasst.

3. Mineralzusammensetzung nach Anspruch 1 oder Anspruch 2, in der der Kalzium enthaltende Anteil ferner Kalziumhydroxid umfasst, zum Beispiel in Form von Portlandit.

4. Mineralzusammensetzung nach irgendeinem der Ansprüche 1 bis 3, in der der gemischte Feststoff der erwähnten Mineralzusammensetzung eine spezifische Oberfläche, gemessen durch Stickstoffadsorption und berechnet nach der BET-Methode, von mehr als oder gleich 15 m²/g hat.

5. Mineralzusammensetzung nach irgendeinem der vorigen Ansprüche, welche ferner eine wässrige Phase umfasst, wobei die erwähnte Mineralzusammensetzung in Form einer Suspension oder Paste vorliegt.

6. Mineralzusammensetzung nach irgendeinem der Ansprüche 1 bis 4, in der die erwähnte Mineralzusammensetzung in fester Form vorliegt, insbesondere pulverförmig, und einen Feuchtigkeitsgrad von zwischen 0 und 4 Gewichtsprozent Wasser verglichen mit dem Gesamtgewicht der Zusammensetzung aufweist.

7. Mineralzusammensetzung nach irgendeinem der Ansprüche 1 bis 6, in der der erwähnte Hydromagnesit durch die Formel Mg₅(CO₃)₄(OH)₂.4H₂O repräsentiert ist und in einem Gehalt von zwischen 10 und 60 Gew.% im Verhältnis zum Gewicht des erwähnten gemischten Feststoffes vorliegt.

8. Mineralzusammensetzung nach irgendeinem der Ansprüche 1 bis 7, in der der Kalzium enthaltende Anteil in einer Menge von zwischen 35 und 75 Gew.% im Verhältnis zum Gesamtgewicht des gemischten Feststoffes vorliegt und in der der Magnesium enthaltende Anteil in einer Menge von zwischen 25 und 65 Gew.% im Verhältnis zum Gesamtgewicht der gemischten festen Phase vorliegt.

9. Mineralzusammensetzung nach irgendeinem der Ansprüche 1 bis 8, in der der gemischte Feststoff ein Stoffmengenverhältnis Ca/Mg von zwischen 0,4 und 1,2 aufweist.

10. Mineralzusammensetzung nach irgendeinem der Ansprüche 1 bis 5 und 7 bis 9, in der der gemischte Feststoff in einem Verhältnis in einer Bandbreite zwischen 5 und 65 Gew.% im Verhältnis zum Gesamtgewicht der Zusammensetzung vorliegt und in der eine flüssige Phase in einem Verhältnis in einer Bandbreite zwischen 35 und 95 Gew.% im Verhältnis zum Gesamtgewicht der Mineralzusammensetzung vorliegt.

11. Mineralzusammensetzung nach irgendeinem der Ansprüche 1 bis 10, in der die trockene Schüttdichte der gemischten Feststoffs niedriger als oder gleich 200 kg/m³ oder höher als oder gleich 100 kg/m³ ist.

12. Mineralzusammensetzung nach irgendeinem der Ansprüche 1 bis 11, in der die thermische Leitfähigkeit der gemischten festen Phase zwischen 25 und 45 mW/K/m beträgt.

13. Mineralzusammensetzung nach irgendeinem der Ansprüche 1 bis 12, in der der erwähnte gemischte Feststoff aus Agglomeraten besteht, welche in Partikel mit einer Größe von höchstens 2 mm zermahlen sind.

14. Mineralzusammensetzung nach irgendeinem der Ansprüche 1 bis 13, **dadurch gekennzeichnet, dass** die Aggregate des gemischten Feststoffs aus einem Kalzium enthaltenden Kern bestehen, an den sich die Hydromagnesitplättchen angelagert haben.

15. Verfahren zur Herstellung einer Mineralzusammensetzung aus einem gemischten Feststoff aus Kalzium- und Magnesiumkarbonat, welches Folgendes umfasst:
- i) Herstellung von Dolomitkalk, der zumindest teilweise hydratisiert ist, zunächst durch Brennen eines Rohdolomits, und danach zumindest teilweises Hydratisieren des so gebrannten Dolomits,
- ii) Suspendierung des erwähnten, zumindest teilweise hydratisierten Dolomitkalkes in eine wässrige Phase, wobei diese Suspension einen Anteil von zwischen 5 und 15 Gew.% an Feststoff im Verhältnis zum Gesamtgewicht der Suspension aufweist,
- iii) Karbonatisierung des erwähnten zumindest teilweise hydratisierten Dolomitkalkes in Suspension durch Eingasen eines CO₂-haltigen Gases in die erwähnte Suspension, die auf eine Temperatur von 55 bis 90 °C erwärmt ist, in einem Volumenstrom von CO₂ von 2,5 bis 15 dm³/min/kg des erwähnten Feststoffs der Suspension, mit einer schrittweisen Senkung des pH-Wertes der Suspension auf einen Wert unter 9 und, parallel dazu, einer allmählichen Senkung der elektrischen Leitfähigkeit der Suspension, bis zu deren Stabilisierung und schließlich einem Erhöhen der stabilisierten elektrischen Leitfähigkeit, wobei das Karbonatisieren stoppt wird, sobald diese Erhöhung der elektrischen Leitfähigkeit beobachtet wird,
- iv) Erhalt eines gemischten Feststoffs aus Kalzium- und Magnesiumkarbonat, bestehend aus einem kristallisierten Kalzium enthaltenden Anteil und einem kristallisierten Magnesium enthaltenden Anteil in Form von Plättchen, wobei die Kristalle des Kalzium enthaltenden Anteils und jene des Magnesium enthaltenden Anteils in Form von gemischten Aggregaten verfestigt sind, wobei diese Aggregate wiederum zumindest teilweise in Form von Agglomeraten zusammengeballt sind, wobei der erwähnte Kalzium enthaltende Anteil zumindest ein Karbonat aus der Gruppe bestehend aus Kalzit, Aragonit und deren Mischungen umfasst, wobei der erwähnte Magnesium enthaltende Anteil Hydromagnesit in Plättchenform umfasst, wobei der erwähnte gemischte Feststoff aus Karbonaten der erwähnten Mineralzusammensetzung eine Schüttdichte von weniger als oder gleich 250 kg/m³ und mehr als oder gleich 80 kg/m³, gemessen nach der Norm EN459.2, aufweist.

16. Verfahren nach Anspruch 15, **dadurch gekennzeichnet, dass** der Rohdolomit sich, vor dem Brennen, aus einem dolomitischen Mineralprodukt in Verbindung mit einer oder mehreren Kalzium enthaltenden Substanzen, einer oder mehreren Magnesium enthaltenden Substanzen oder einer Mischung dieser Substanzen besteht und ein Stoffmengenverhältnis Ca/Mg zwischen 0,8 und 1,2 im dolomitischen Mineralprodukt bildet und dadurch, dass der Feststoff der nach den Schritten des Brennens, des Hydratisierens und des Suspendierens, neben den zumindest teilweise hydratisierten Partikeln, diesen ähnliche Partikel enthält, entstanden aus den zusätlichen Substanzen im dolomitischen Mineralprodukt.

17. Verfahren nach irgendeinem der Ansprüche 15 und 16, **dadurch gekennzeichnet, dass** das Brennen des Rohdolomits stufenweise verläuft und dadurch, dass der Feststoff der Suspension einen Anteil von CaCO₃ enthält.

18. Verfahren nach irgendeinem der Ansprüche 15 bis 17, welches darüber hinaus einen Schritt des Hinzufügens von MgO und/oder Mg(OH)₂ zum erwähnten zumindest teilweise hydratisierten Dolomitkalk entweder in der Suspension oder zum trockenen Festostoff umfasst, um einen gemischten Feststoff zu erhalten, welchen ein Stoffmengenverhältnis Ca/Mg von zwischen 0,4 und 1,2 aufweist.

19. Verfahren nach irgendeinem der Ansprüche 15 bis 18, **dadurch gekennzeichnet, dass** das Hydratisieren des gebrannten Dolomits und das Suspendieren des hydratisierten Dolomitkalkes in eine wässrige Phase in einem einzigen Schritt durch das Löschen des gebrannten Dolomits mit einem Überschuss an Wasser durchgeführt werden.

20. Verfahren nach irgendeinem der Ansprüche 15 bis 19, welches darüber hinaus, in der erwähnten karbonatisierten Suspension, einen Schritt der Fest-Flüssig Trennung zwischen dem erwähnten karbonatisierten gemischten Feststoff und der erwähnten wässrigen Phase umfasst.

21. Verfahren nach Anspruch 20, in dem der erwähnte gemischte Feststoff danach getrocknet wird.

22. Verfahren nach irgendeinem der Ansprüche 15 bis 21, in dem die erwähnte gemischte Feststoff gemahlen wird, um Partikel mit einer Größe von höchstens 2 mm zu erhalten.

23. Verfahren nach irgendeinem der Ansprüche 15 bis 22, in dem die erwähnte Temperatur des Karbonatisierens zwischen 60 und 80 °C beträgt.

24. Verfahren nach irgendeinem der Ansprüche 15 bis 23, **dadurch gekennzeichnet, dass** das in die erwähnte Suspension eingedüste Gas CO₂ in einer Konzentration von 10 bis 100 Vol.-% enthält.

25. Verfahren nach irgendeinem der Ansprüche 15 bis 24, welches darüber hinaus ein Sieben auf eine Partikelgröße gleich oder unter 250 µm oder ein Zermahlen auf eine Partikelgröße unter oder gleich 90 µm des erwähnten Feststoffs der zum Karbonatisieren bestimmten Suspension umfasst.

26. Verwendung einer Zusammensetzung nach irgendeinem der Ansprüche 1 bis 14, oder einer Zusammensetzung erhalten nach dem Verfahren nach irgendeinem der Ansprüche 15 bis 21 in Baustoffen.

27. Verwendung einer Zusammensetzung nach Anspruch 26, als Bestandteil von Wärmedämmstoffen, insbesondere in Wärmedämmplatten.

## Claims

1. A mineral composition based on a mixed solid phase of synthetic calcium and magnesium carbonates, formed with a crystallized calcium portion and with a crystallized magnesium portion as platelets, the crystals of the calcium portion and those of the magnesium portion being aggregated as composite aggregates, these aggregates being themselves at least partly agglomerated as agglomerates, said calcium portion comprising at least one carbonate selected from the group consisting of calcite, aragonite and mixtures thereof, said magnesium portion comprising hydromagnesite in platelet form, said mixed solid phase of carbonates of said mineral composition having a bulk density less than or equal to 250 kg/m³, and greater than or equal to 80 kg/m³, as measured according to the EN 459.2 standard.

2. The mineral composition according to claim 1, wherein the magnesium portion further comprises one or several other magnesium compounds selected from the group consisting of periclase, magnesium oxyhydroxide and brucite.

3. The mineral composition according to claim 1 or claim 2, wherein the calcium portion further comprises calcium hydroxide, for example in the form of portlandite.

4. The mineral composition according to any of claims 1 to 3, wherein the mixed solid phase of said mineral composition has a specific surface area measured by nitrogen adsorption manometry and calculated according to the BET method greater than or equal to 15 m²/g.

5. The mineral composition according to any of the preceding claims, further comprising an aqueous phase, said mineral composition being in the form of a suspension or slurry.

6. The mineral composition according to any of claims 1 to 4, wherein said mineral composition is in solid form, in particular in powdery form, and has a humidity level comprised between 0 and 4% by weight of water based on the total weight of the composition.

7. The mineral composition according to any of claims 1 to 6, wherein said hydromagnesite is represented by the formula Mg₅(CO₃)₄(OH)₂.4H₂O and is present at a content comprised between 10 and 60% by weight based on the weight of said mixed solid phase.

8. The mineral composition according to any of claims 1 to 7, wherein the calcium portion is present in an amount ranging from 35 to 75% by weight based on the total weight of the mixed solid phase and wherein the magnesium portion is present in an amount ranging from 25 to 65% by weight based on the total weight of the mixed solid phase.

9. The mineral composition according to any of claims 1 to 8, wherein the mixed solid phase has a Ca/Mg molar ratio comprised between 0.4 and 1.2.

10. The mineral composition according to any of claims 1 to 5 and 7 to 9, wherein the mixed solid phase is present in a proportion comprised in the range from 5 to 65% by weight based on the total weight of the composition and wherein a liquid medium is present in a proportion comprised in the range from 35 to 95% by weight based on the total weight of the mineral composition.

11. The mineral composition according to any of claims 1 to 10, wherein the bulk density of the mixed solid phase is less than or equal to 200 kg/m³ or greater than or equal to 100 kg/m³.

12. The mineral composition according to any of claims 1 to 11, wherein the thermal conductivity of the mixed solid phase is comprised between 25 and 45 mW/K/m.

13. The mineral composition according to any of claims 1 to 12, wherein said mixed solid phase consists of agglomerates milled into particles with a size of less than or equal to 2 mm.

14. The mineral composition according to any of claims 1 to 13, **characterized in that** the aggregates of the mixed solid phase consist of a calcium core on which hydromagnesite platelets are aggregated.

15. A method for manufacturing a mineral composition based on a mixed solid phase of calcium and magnesium carbonates, comprising:
- i) preparing at least partially hydrated dolomite by calcination of a crude dolomite and then by at least partial hydration of the thereby calcined dolomite,
- ii) suspending said at least partially hydrated dolomite in an aqueous phase, this suspension having a proportion comprised between 5 and 15% by weight of solid material based on the total weight of the suspension,
- iii) carbonating said suspended dolomite by injecting a gas containing CO₂ into said suspension heated to a temperature from 55 to 90°C with a CO₂ flow rate from 2.5 to 15 dm³/min/kg of said solid material of the suspension, with a stepwise pH decrease of the suspension down to a value of less than 9 and with, in parallel, successively a decrease in the electric conductivity of the suspension, and then stabilization thereof and finally an increase in the stabilized electric conductivity, the carbonation being stopped as soon as this increase in electric conductivity is observed,
- iv) obtaining a synthetic mixed solid phase of calcium and magnesium carbonates consisting of a crystallized calcium portion and a crystallized magnesium portion as platelets, the crystals of the calcium portion and those of the magnesium portion being aggregated as composite aggregates, these aggregates being themselves at least partly aggregated as agglomerates, said calcium portion comprising at least one carbonate selected from the group consisting of calcite, aragonite and mixtures thereof, said magnesium portion comprising hydromagnesite in platelet form, said mixed solid phase of carbonates of said mineral composition having a bulk density less than or equal to 250 kg/m³, and greater than or equal to 80 kg/m³, as measured according to the EN 459.2 standard.

16. The method according to claim 15, **characterized in that** the crude dolomite , before calcination, is present in a dolomitic mineral product associated with calcium substance(s), magnesium substance(s) or a mixture of these substances while forming a Ca/Mg molar ratio comprised between 0.8 and 1.2 in the dolomitic mineral product and **in that** the solid material of the suspension obtained after the calcination, hydration and suspension steps contains, in addition to the at least partially hydrated dolomite particles, particles related to the latter, issued from the associated substances in the dolomitic mineral product.

17. The method according to one of claims 15 and 16, **characterized in that** the calcination of the crude dolomite is partial and **in that** the solid material of the suspension contains a CaCO₃ fraction.

18. The method according to one of claims 15 to 17, further comprising a step for adding MgO and/or Mg(OH)₂ to said at least partially hydrated dolomite either suspended or not, so as to obtain a mixed solid phase having a Ca/Mg molar ratio comprised between 0.4 and 1.2.

19. The method according to any of claims 15 to 18, **characterized in that** the hydration of the calcined dolomite and the suspension of the hydrated dolomite in an aqueous phase are carried out in a single step by slaking calcined dolomite with an excess of water.

20. The method according to one of claims 15 to 19, further comprising, in said carbonated suspension, a step for solid/liquid separation between said carbonated mixed solid phase and said aqueous phase.

21. The method according to claim 20, wherein said mixed solid phase is then dried.

22. The method according to any of claims 15 to 21, wherein said mixed solid phase is milled so as to obtain particles with a size of less than or equal to 2 mm.

23. The method according to any of claims 15 to 22, wherein said carbonation temperature is comprised between 60 and 80°C.

24. The method according to any of claims 15 to 23, **characterized in that** the gas injected into said suspension contains CO₂ at a concentration from 10 to 100% by volume.

25. The method according to any of claims 15 to 24, further comprising sieving to a particle size equal to or less than 250 µm or milling to a particle size equal to or less than 90 µm of said solid material of the suspension intended for carbonation.

26. The use of a composition according to any of claims 1 to 14, or of a composition obtained in accordance with the method according to any of claims 15 to 21, in construction materials.

27. The use of a composition according to claim 26, as a constituent of thermal insulation materials, in particular in thermal insulation panels.
